# EUROPÄISCHE PATENTSCHRIFT

(11) **EP 0 682 788 B1**
(45) Veröffentlichungstag und Bekanntmachung des Hinweises auf die Patenterteilung: **30.07.1997**
(21) Anmeldenummer: 93921792.3
(22) Anmeldetag: 06.10.1993
(51) Int. Cl.: G06F 3/16

(54) **SPRACHGESTEUERTES DATENEINGABEGERÄT FÜR COMPUTER, INSBESONDERE PERSONALCOMPUTER**
VOICE-CONTROLLED DATA ENTRY DEVICE FOR COMPUTERS, PARTICULARLY PERSONAL COMPUTERS
DISPOSITIF D'ENTREE DE DONNEES COMMANDE PAR LA VOIX, POUR ORDINATEUR, NOTAMMENT POUR ORDINATEUR INDIVIDUEL

(30) Priorität: 31.10.1992 DE 4236908
(43) Veröffentlichungstag der Anmeldung: 22.11.1995
(73) Patentinhaber: GOTO ELEKTRONIK GMBH, D-40237 Düsseldorf (DE)
(72) Erfinder: GOTO, Shozo, D-40237 Düsseldorf (DE)
(74) Vertreter: Bauer, Wulf, Dr.
(86) Internationale Anmeldenummer: DE9300940
(87) Internationale Veröffentlichungsnummer: WO9410626

(56) Entgegenhaltungen:
- EP-A- 0 102 109
- WO-A-88/00371

## Beschreibung

Die Erfindung betrifft ein sprachgesteuertes Dateneingabegerät nach dem Oberbegriff des Patentanspruchs 1.

Aus der WO 88/00371 ist ein zwischen einem Computer und einer Tastatur zwischengeschaltetes Dateneingabegerät dieser Art bekannt. Es hat eine Tastatur, deren Tasten sprachgesteuert oder mechanisch betätigt werden können. Durch einen im Dateneingabegerät angeordneten Schalter ist es möglich, daß entweder Daten nur über die Tastatur oder sowohl über die Tastatur und das Dateneingabegerät in den Rechner eingegeben werden können.

Aus der EP 0 102 109 ist ein allgemeines, programmierbares System für die Ausführung von akustisch eingegebenen Befehlen bekannt. Es ist mit einem auswechselbaren Speicher für die individuelle Sprachinformation eines Sprechers ausgestattet.

Die Erfindung hat es sich zur Aufgabe gemacht, das sprachgesteuerte Dateneingabegerät der eingangs genannten Art so weiterzuentwickeln und auszubilden, daß es bei einfachem Aufbau für den praktischen Betrieb geeignet ist, sich problemlos an Computer, insbesondere Personalcomputer, anschließen läßt und auch bei hohem Umweltgeräuschpegel und Störsignalen betrieben werden kann.

Gelöst wird diese Aufgabe durch das sprachgesteuerte Dateneingabegerät mit den Merkmalen des Patentanspruchs 1.

Dieses Dateneingabegerät kann wie eine Tastatur an einen Computer angeschlossen werden. Dadurch sind für den Anwender keinerlei Maßnahmen am Computer selbst notwendig, insbesondere muß dieser nicht geöffnet und um eine zusätzliche Steckkarte erweitert werden. Das Dateneingabegerät ist ein selbständiges, unabhängig vom Computer betreibbares und in einem eigenen Gehäuse angeordnetes Gerät, das an beliebiger Stelle, insbesondere auch nicht unmittelbar zugänglich, angeordnet werden kann. Der entscheidende Vorteil liegt darin, daß es ausgangsseitig mit demselben Vielfachsteckverbinder ausgerüstet ist, den auch die Tastatur des Rechners hat. Weiterhin benötigt es keine Elemente des Computers für seine Funktion, z. B. wird der Speicher des Computers nicht belegt.

Über das Dateneingabegerät können in an sich bekannter Weise beliebige Befehlsfolgen im Computer ausgelöst werden. Die Umsetzung zwischen dem gesprochenen Wort und dem Befehl erfolgt im Mikroprozessor, in ihm ist eine Tabelle der mit einzelnen, erkannten Worten ausgelösten Befehle enthalten, er bewirkt die Zuordnung. Die Befehle, die ausgelöst werden können, sind hierbei nur durch den Computer selbst begrenzt, beispielsweise können Batch-Dateien aufgerufen werden, es können vollständige Programme aufgerufen werden oder aber nur einzelne Steuerimpulse, beispielsweise für Sonderzeichen.

Mit dem Dateneingabegerät nach der Erfindung kann es damit ermöglicht werden, daß nur ein autorisierter Benutzer, der sich durch seine Sprache ausweist, Zugang zu dem Rechner als solches oder aber nur zu gewissen Programmen oder Dateien hat. Eine andere Person als die autorisierte Person müßte dieselbe Stimme haben und mit dieser Stimme das Wort sprechen, um denselben Zugang wie die autorisierte Person zu haben. Das so erreichte Sicherheitssystem hat den Vorteil, daß sich die autorisierte Person nicht spezielle Schlüsselzahlen, Schlüsselworte oder dergleichen für die Zugangsberechtigung merken muß.

Unter dem Begriff Wort bzw. Worte werden beliebige Lautfolgen verstanden, die nicht unbedingt in irgendeiner Sprache eine konkrete Bedeutung haben müssen. Wort wird also als Aufeinanderfolge von Lauten verstanden. Diese Worte können auch gesungen werden, sie können aus einzelnen Worten und auch aus einer Wortfolge, ähnlich einem Satz, bestehen. Um die Speicherkapazität nicht zu groß zu machen bzw. den vorhandenen Speicher nicht zu stark zu belegen, ist es vorteilhaft, wenn die Worte kurz sind, beispielsweise nicht länger als zwei Sekunden sind.

Im Dateneingabegerät selbst sind die Worte, denen Befehle zugeordnet sind, in einem separaten Speicher als Bit-Muster abgespeichert. Das abgespeicherte Bit-Muster ist typisch für den autorisierten Benutzer. Spricht dieser nun in das Mikrophon das abgespeicherte Wort noch einmal ein, so wird dieses im wesentlichen dasselbe Bit-Muster haben wie das abgespeicherte Wort. Dies erkennt der Komparator, der dem Mikroprozessor die Information übermittelt, daß ein konkretes Wort, zum Beispiel das n-te Wort, erkannt wurde. Der Mikroprozessor ordnet dieser Information einen vorgebbaren, also änderbaren Steuerimpuls zu, der in serieller Darstellung (wie bei Tastaturen üblich) an den ausgangsseitigen Vielfachsteckverbinder geleitet wird. Ist dieser in den Tastatureingang eines Rechners eingesteckt und der Rechner eingeschaltet, wird im Rechner ein Befehl ausgelöst.

Als besonders vorteilhaft hat es sich nun erwiesen, das Gerät mit einer Eingangsbuchse für den Vielfachsteckverbinder einer Tastatur auszurüsten. Dadurch kann das erfindungsgemäße Dateneingabegerät einem Computer, insbesondere Personalcomputer, zugefügt werden, ohne daß irgendwelche hardwaremäßigen Änderungen am Computer erfolgen müssen. Insbesondere aber bleibt die Tastatur angeschlossen, so daß sowohl über die Tastatur als auch über das erfindungsgemäße Dateneingabegerät dem Computer Befehle übermittelt werden können.

Intern können im Dateneingabegerät nun die Datenleitung, die zur Tastatur führt und die aus dem Mikroprozessor ausgangsseitig herausgeführt ist, unmittelbar miteinander verbunden sein. Dies hat den Vorteil, daß Tastatur und Spracheingabegerät gleichzeitig benutzt werden können. Es hat sich aber als vorteilhaft erwiesen, einen Umschalter zwischen den beiden Datenleitungen der Tastatur und des Dateneingabegerätes vorzusehen, so daß entweder die Tastatur oder das Dateneingabegerät mit dem Computer verbunden ist. Ein derartiger Schalter ist bei einer seriellen Übertragung, wie sie bei dem Tastatureingang vorliegt, einfach auszuführen. Der Schalter kann entweder manuell, beispielsweise über einen Impulsgeber oder einen Umschalter an der Außenseite des Dateneingabegerätes, oder aber sprachgesteuert geschaltet werden. Im letzteren Fall ist immer die Tastatur aktiv, sofern nicht entweder ein Schlüsselwort für die Umschaltung oder überhaupt ein Wort in das Mikrophon gesprochen wird. Sobald nämlich am NF-Verstärker ein Ausgangssignal vorliegt, kann dieses dazu benutzt werden, den Umschalter zu betätigen, so daß dieser von der Tastatur weg auf das Spracheingabegerät schaltet.

Schließlich hat es sich als besonders vorteilhaft erwiesen, den Permanentspeicher, auf dem die Befehlsworte eines speziellen Sprechers, also einer autorisierten Person, als Bit-Muster abgespeichert sind, auswechselbar, insbesondere steckbar, auszubilden. Dadurch kann einerseits das Dateneingabegerät nach der Erfindung von mehreren Personen benutzt werden, diese müssen jeweils ihre eigenen, permanenten Speicher einstecken bzw. einfügen, andererseits wird aber auch die Sicherheit gegen Fremdnutzung erhöht, da nun nicht einmal mehr die gespeicherten Referenzworte aus dem Dateneingabegerät ausgelesen werden können.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen
- Fig. 1: eine Prinzipskizze in Form einer Draufsicht auf das Dateneingabegerät, zusätzlich sind eine Tastatur und ein Computer dargestellt,
- Fig. 2: ein Blockdiagramm des Dateneingabegerätes und
- Fig. 3: eine perspektivische Darstellung einer Ausführungsform des Dateneingabegerätes.

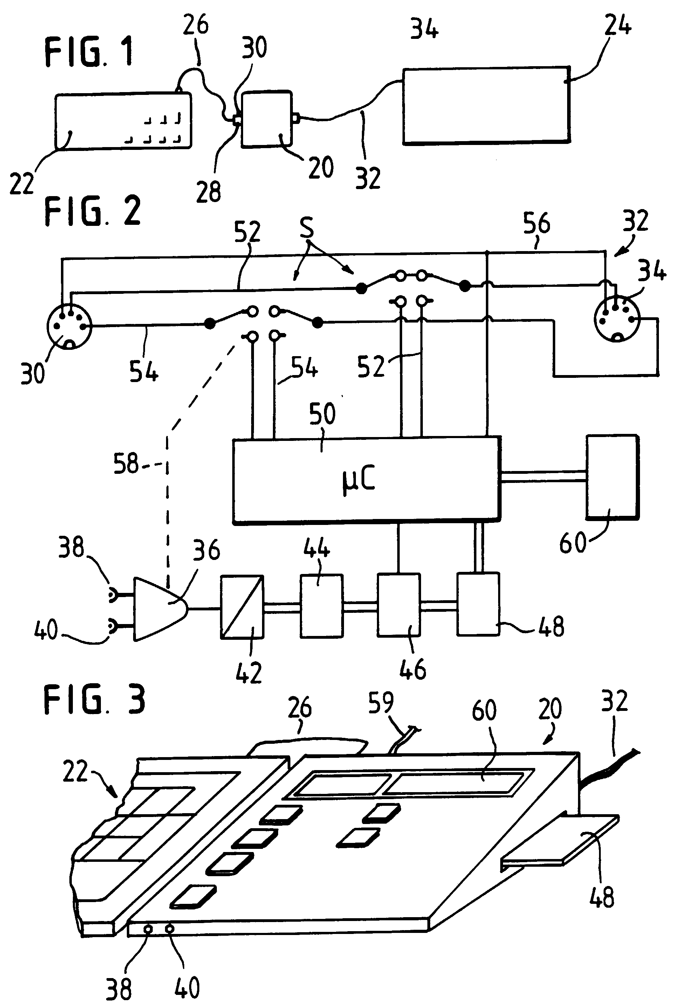

Wie Fig. 1 zeigt, ist das Dateneingabegerät 20 einerseits mit einer Tastatur 22 und andererseits mit einem Rechner 24 verbunden. In bekannter Weise hat die Tastatur eine Anschlußleitung 26 mit einem Vielfachstecker 28, der in eine entsprechende Buchse 30 des Dateneingabegerätes eingesteckt ist. Ausgangsseitig hat das Dateneingabegerät eine Ausgangsleitung 32 mit einem Vielfachsteckverbinder 34, der mit dem Vielfachstecker 28 baugleich ist. Er ist in eine Vielfachbuchse im Rechner 24 eingesteckt, die mit der Buchse 30 baugleich ist. Aufgrund der baugleichen Ausbildung der Vielfachsteckverbindung ist es möglich, daß der Vielfachstecker 28 in die Vielfachbuchse des Rechners 24 eingesteckt werden kann, wenn das Dateneingabegerät nicht benötigt wird.

Fig. 2 zeigt eine schematische Darstellung in Form eines Blockschaltbildes der wichtigen Funktionen des Dateneingabegerätes. An einen NF-Verstärker 36, der als Differenzverstärker ausgeführt ist, können über eine Mikrophonbuchse 38 ein Mikrophon (nicht dargestellt) für die Spracheingabe und über eine Mikrophonbuchse 40 ein Mikrophon (nicht dargestellt) für den Geräuschhintergrund angeschlossen werden. Verstärkt wird im NF-Verstärker 36 nur die Differenz zwischen den beiden an den Mikrophoneingängen anliegenden Spannungen, auf diese Weise werden Hintergrundgeräusche, die beide Mikrophone aufnehmen, unterdrückt. Das Dateneingabegerät 20 kann dadurch auch bei hohem Umweltgeräuschpegel, beispielsweise im Auto oder Flugzeug, betrieben werden. Damit das Nutzsignal möglichst gut erfaßt wird, sollte das entsprechende Mikrophon nahe am Mund eines Sprechers sein, das andere Mikrophon sollte so angeordnet sein, daß es die Sprache möglichst nicht aufnimmt, wohl aber die Umweltgeräusche, die auch das Sprechmikrofon erreichen. Die verstärkte Niederfrequenz wird in einem Analog/Digital-Wandler 42, im folgenden A/D-Wandler genannt, digitalisiert. Das hierbei verwendete Verfahren ist für die Erfindung ohne Bedeutung, es werden bekannte Verfahren eingesetzt, beispielsweise Verfahren, wie sie für digitale Sprachspeicher bekannt sind. Das Ergebnis der Digitalisierung liegt ein gesprochenes Wort als bit-Muster vor, das in einem Speicher 44 abgespeichert wird. Der Speicher 44 ist mit einem Eingang eines Komparators 46 verbunden, am anderen Eingang des Komparators ist ein auswechselbarer Speicher 48 angeschlossen. Hier handelt es sich um einen steckbaren Speicher, beispielsweise im Format einer Steckkarte, er hat eine, je nach Gebrauchszweck angepaßte Kapazität, z.B. 128 KByte. Er ist über eine Vielfachsteckverbindung mit der übrigen Schaltung des Dateneingabegerätes 20 verbunden, die Austauschbarkeit ist aus Fig. 3 ersichtlich. Im Komparator 46 werden das gesprochene Wort und die abgespeicherten Worte nach einer geeigneten Datenvergleichsmethode, z.B. dem BTSP-Verfahren (binary time spectrum pattern matching), verglichen.

Gesteuert über einen Mikroprozessor 50 werden nun an den Referenzeingang des Komparators 46, an dessen anderen Eingang der Speicher 44 angeschlossen ist, nacheinander die im auswechselbaren Speicher 48 abgespeicherten Worte angelegt. Wenn Überstimmung oder weitgehende Übereinstimmung zwischen einem gespeicherten Wort aus dem auswechselbaren Speicher 48 und dem im Speicher 44 gespeicherten Wort besteht, erscheint am Ausgang des Komparators 46, der mit dem Mikroprozessor 50 verbunden ist, ein entsprechendes digitales Signal. Damit kann der Mikroprozessor 50 das entsprechende, aus dem auswechselbaren Speicher 48 abgerufene Wort, das beispielsweise das n-te gespeicherte Wort ist, dem gesprochenen Wort aus dem Speicher 44 zuordnen und einen entsprechenden Befehl, der im Mikroprozessor 50 abgespeichert ist, aufrufen und abgeben. Dadurch erscheint auf einer Datenleitung 52, mit der der Mikroprozessor 50 über eine noch zu besprechende Schalteranordnung S verbunden ist, der entsprechende Befehl in serieller Darstellung. Die Darstellung entspricht dem Datenformat, wie es auch eine Tastatur abgibt.

Weiterhin ist der Mikroprozessor 50 noch über eine Taktsignalleitung 54 mit der Schalteranordnung S und über eine spannungsführende Leitung 56 mit der Vielfachbuchse 30 bzw. dem Vielfachsteckverbinder 34 verbunden. Über die spannungsführende Leitung 56 erhält der Mikroprozessor 50 die Information, daß der Rechner 24 eingeschaltet ist (oder nicht), nur bei eingeschaltetem Rechner werden die oben beschriebenen Funktionen eines Wortvergleichs durchgeführt.

Wie aus Fig. 2 ersichtlich ist, ist die Schalteranordnung S einerseits in die Datenleitung 52 und andererseits in die Taktsignalleitung 54 eingefügt und besteht aus jeweils zwei Umschaltern. In der gezeigten Position der Schalteranordnung S sind Datenleitung 52 und Taktsignalleitung 54 von der Tastatur 22 zum Rechner durchgeschaltet, das Dateneingabegerät 20 ist außer Funktion. In der zweiten, nicht dargestellten Position der Schalteranordnung S ist der Mikroprozessor 50 sowohl in die Datenleitung 52 als auch in die Taktsignalleitung 54 seriell eingeschaltet. Damit ist der Mikroprozessor 50 ausgangsseitig unmittelbar mit den Eingängen für die Datenleitung 52 und die Taktsignalleitung 54 des Rechners verbunden. Die von der Tastatur 52 kommenden Steuersignale gelangen zunächst in den Mikroprozessor 50 und werden nach Bearbeitung an den Rechner 24 weitergeleitet. In dieser Position der Schalteranordnung S, in der der Mikroprozessor 50 in die Leitungen 52, 54 eingeschaltet ist, ist sowohl eine Dateneingabe über die Tastatur 22 als auch über die Mikrophone möglich.

In einer anderen, nicht dargestellten Ausführung ist die Schalteranordnung S so getroffen, daß entweder nur die Tastatur 22 oder das Dateneingabegerät 20 mit dem Rechner 24 verbunden sind, oder daß zumindest zusätzlich noch eine Schalterstellung vorgestehen ist, bei der nur das Dateneingabegerät 20, nicht aber die Tastatur 22 mit dem Computer verbunden ist.

Die Schalteranordnung S kann mechanisch oder elektrisch gesteuert werden. Bei mechanischer Steuerung ist ein Taster oder ein mechanischer Umschalter vorgesehen, der die entsprechenden Schaltfunktionen auslöst bzw. durchführt. Bei elektrischer Betätigung der Schalteranordnung S ist diese als Halbleiterschalter oder mechanischer Schalter ausgeführt, sie wird gesteuert durch Datensignale. In Fig. 2 ist gestrichelt eine Leitung 58 eingezeichnet, die den Ausgang des NF-Verstärkers mit der Schalteranordnung S verbindet. Auf diese Weise wird eine sogenannte VOX-Schaltung, also eine sprachausgelöste Umschaltung der Schalteranordnung S erreicht. Sobald das Differenzsignal einen gewissen Spannungswert erreicht, schaltet die Schalteranordnung S um, so daß eine sprachgesteuerte Eingabe über die Datenleitung 52 den Rechner 24 erreichen kann. Im Ruhezustand, wenn kein ausreichendes NF-Signal vorliegt, ist die Schalteranordnung S so geschaltet, wie dies Fig. 2 zeigt.

Alternativ oder zusätzlich können auch für die Steuerung der Schalteranordnung S die Daten herangezogen werden, die von der Tastatur 22 geliefert werden. Dadurch ist sichergestellt, daß bei von der Tastatur 22 abgegebenen Daten auf der Datenleitung 22 diese über einen Verstärker (nicht dargestellt) die Schalteranordnung S so betätigen, daß der Datenfluß von der Tastatur 22 zum Rechner 24 möglich ist.

Fig. 3 zeigt schließlich ein Ausführungsbeispiel für das Dateneingabegerät 20. Im gezeigten Ausführungsbeispiel ist es ähnlich wie eine Tastatur 22 aufgebaut, hat also ebenfalls ein etwa pultförmiges Gehäuse und unterscheidet sich vom Gehäuse der Tastatur 22 nur dadurch, daß es wesentlich kürzer ist. Die Anschlußleitung 26 und die Ausgangsleitung 32 sind dargestellt. Zusätzlich ist ein Netzanschluß 59 vorgesehen. An der rechten Seitenwand ist ein Einlaßschlitz für den auswechselbaren Speicher 48, der als Steckkarte dargestellt ist, vorgesehen. An der schmalen Frontseite sind die Mikrophonbuchsen 38, 40 angeordnet. Auf dem eigentlichen, schräg liegenden Bedienungsfeld ist oben eine LCD-Anordnung 60 für Informationen über den jeweiligen Zustand des Dateneingabegerätes 20 angeordnet. Darunter befinden sich unterschiedliche Drucktaster, die für die Dateneingabe, Speicherung und die Umschaltung der Schalteranordnung S dienen.

Um zunächst auf dem auswechselbaren Speicher 48 ein bit-Muster abspeichern zu können, wird ein entsprechender Taster auf der Frontseite gedrückt. Das Gerät verlangt sodann, das entsprechende Wort dreimal zu sprechen. Die dadurch erhaltenen drei bit-Muster werden gemittelt und abgespeichert. Auf diese Weise kann eine Vielzahl von Worten eingegeben werden, die alle auf dem auswechselbaren Speicher 48 abgespeichert werden.

Im normalen Betrieb ist die Betätigung einer Taste nicht notwendig. Sobald in das Mikrophon, das für die Sprachaufnahme vorgesehen ist, ein Wort hineingesprochen wird, erfolgt die Überprüfung und Umsetzung in einen Befehl, der dann über die Ausgangsleitung 32 dem (nicht dargestellten) Rechner 24 zugeleitet wird.

Als vorteilhaft hat es sich erwiesen, zwischen dem auswechselbaren Speicher 48 und dem Komparator 46 einen Arbeitsspeicher, z. B. Halbleiterspeicher, anzuordnen. Die Daten aus dem auswechselbaren Speicher 48 werden bei Beginn einerr Benutzung des Gerätes in den zusätzlichen Speicher geladen und von dort dem Komparatur 46 zugeleitet.

## Patentansprüche

1. Sprachgesteuertes Dateneingabegerät für Computer, insbesondere Personalcomputer mit computergesteuerter Steueranlage, die eine einen Stecker (28) aufweisende Tastatur (22) und einen diesem Stecker (28) angepaßten Tastatureingang eines Rechners (24) aufweisen, wobei das Dateneingabegerät einen Mikroprozessor (50) und einen Speicher (48) hat, zwischen Rechner (24) und Tastatur (22) angeordnet ist und so betrieben wird, daß dann, wenn eine im Speicher (48) gespeicherte Information mit einer in das Dateneingabegerät eingegebenen Information übereinstimmt, eine einstellbare, serielle Impulsfolge abgegeben wird, die der Signalnorm der von der Tastatur (22) abgegebenen Steuerimpulsfolgen entspricht, dadurch gekennzeichnet, daß das Dateneingabegerät zwei Mikrophone, einen als Differenzverstärker ausgeführten NF-Verstärker (36), einen A/D-Wandler (42) und einen mit dem Mikroprozessor (50) verbundenen Komparator (46) aufweist, daß der Speicher (48) separat vom Mikroprozessor (50), als permanenter Speicher und austauschbar ausgeführt ist, sodaß unterschiedliche Sprecher ihre eigenen, permanenten Speicher (48) einsetzen können, und daß das Dateneingabegerät eine Eingangsbuchse (30) für den Stecker (28) der Tastatur (22) und einen ausgangsseitigen Vielfachsteckverbinder (34) hat, der dem Tastatureingang des Rechners (24) entspricht.

2. Sprachgesteuertes Dateneingabegerät nach Anspruch 1, dadurch gekennzeichnet, daß der permanente Speicher (48) auf einer Steckkarte ausgebildet ist.

3. Sprachgesteuertes Dateneingabegerät nach Anspruch 1, dadurch gekennzeichnet, daß die ausgangsseitigen Datenleitungen von Tastatur (22) und Mikroprozessor (24) miteinander verbunden sind.

4. Sprachgesteuertes Dateneingabegerät nach Anspruch 1, dadurch gekennzeichnet, daß Tastatur (42) und Mikroprozessor (24) mit demselben Takt-signal getaktet werden.

5. Sprachgesteuertes Dateneingabegerät nach Anspruch 1, dadurch gekennzeichnet, daß zwischen den ausgangsseitigen Datenleitungen der Tastatur (22) und des Mikroprozessors (50) ein Umschalter S vorgesehen ist.

6. Sprachgesteuertes Dateneingabegerät nach Anspruch 5, dadurch gekennzeichnet, daß der Umschalter S mechanisch über einen Schalter, zum Beispiel Impulstaster, ansteuerbar ist.

7. Sprachgesteuertes Dateneingabegerät nach Anspruch 5, dadurch gekennzeichnet, daß der Umschalter S elektronisch angesteuert ist, insbesondere durch eine Sprachsteuerung (58).

8. Sprachgesteuertes Dateneingabegerät nach einem der Ansprüche 5 bis 7, dadurch gekennzeichnet, daß der Umschalter S entweder die Daten- und Taktimpulsleitung der Tastatur (22) direkt mit dem Tastatureingang des Computers (24) verbindet oder daß diese Daten- und Taktimpulsleitung der Tastatur (22) an jeweils einen Eingang des Mikroprozessors (50) angelegt werden und jeweils ein Ausgang des Mikroprozessors (50) mit dem Tastatureingang des Computers (24) verbunden ist.

9. Sprachgesteuertes Dateneingabegerät nach Anspruch 1, dadurch gekennzeichnet, daß zwischen dem auswechselbaren Speicher (48) und dem Komparator (46) ein Arbeitsspeicher angeordnet ist, in den die Daten aus dem auswechselbaren Speicher (48) bei Beginn einer Benutzung des Dateneingabegerätes eingeladen und von dort dem Komparator (46) zugeleitet werden.

## Claims

1. Voice-controlled data input device for computers, especially personal computers with a processor controlled control unit comprising a keyboard (22) having a plug connector (28) and a keyboard input of a computer adapted to the plug connector (28), the data input device has a microprocessor (50) and a memory (48), is arranged between the proper computer (24) and the keyboard (22) and is operated in such a way that whenever an information stored in the memory (48) equals an information inputted with the data input device, a predefinable serial impulse sequence is outputted, which is compatible with the data norm of the control impulse sequences outputted by the keyboard (22), characterized in that the data input device has two microphones, a low frequency amplifier (36) in form of a differential amplifier, an AID-converter (42) and a comparator (46) connected with the microprocessor (50), in that the memory (48) is separated from the microprocessor (50) and takes the form of a permanent, interchangeable memory device, so that different speakers may use their individual, permanent memory (48) and in that the data input device has an input socket (30) for the plug connector (28) of the keyboard (22) and a multi plug connector (34) which is arranged at the output side thereof and is conform with the keyboard input of the proper computer (24).

2. Voice-controlled data input device according to claim 1, characterized in that the permanent memory (48) is arranged on a plug-in card.

3. Voice-controlled data input device according to claim 1, characterized in that the output data lines of the keyboard (22) and the ones of the microprocessor (24) are interconnected.

4. Voice-controlled data input device according to claim 1, characterized in that the keyboard (22) and the microprocessor (24) are clocked with the same clock signal.

5. Voice-controlled data input device according to claim 1, characterized in that a commutator S is arranged between the output data lines of the keyboard (22) and the ones of the microprocessor (24).

6. Voice-controlled data input device according to claim 5, characterized in that the commutator S is mechanically controlled by a switch, e.g by an impulse switch.

7. Voice-controlled data input device according to claim 5, characterized in that the commutator S is electronically controlled, especially controlled by a voice control (58).

8. Voice-controlled data input device according to one of the claims 5 to 7, characterized in that the commutator S either connects the data and clock lines of the keyboard (22) directly with the keyboard input of the proper computer (24) or that these data and clock lines of the keyboard (22) are connected to an input of the microprocessor (50), respectively, and an output of the microprocessor (50) is connected with the keyboard input of the proper computer (24), respectively.

9. Voice-controlled data input device according to claim 1, characterized in that a volatile memory is arranged between the interchangeable memory (48) and the comparator (46) and in that the data of the interchangeable memory are transferred into the volatile memory when starting use of the data input device and are accessible to the comparator from there.

## Revendications

1. Dispositif d'entrée de données commandé par la voix, pour ordinateurs, en particulier ordinateurs individuels avec une installation de commande commandée par ordinateur, qui présentent un clavier (22) ayant une fiche (28) ainsi qu'une entrée de clavier d'un ordinateur (24), adaptée à cette fiche (28), le dispositif d'entrée de données présentant un microprocesseur (50) et une mémoire (48), étant disposé entre l'ordinateur (24) et le clavier (22) et étant opéré de telle manière qu'une série sérielle réglable d'impulsions est fournie lorsqu'une information mémorisée dans la mémoire (48) est en concordance avec une information introduite dans le dispositif d'entrée de données, cette série d'impulsions correspondant à la norme de signal des séries d'impulsions de commande fournies par le clavier (22), caractérisé par le fait que le dispositif d'entrée de données présente deux microphones, un amplificateur basse fréquence (36) sous forme d'un amplificateur différenciateur, un convertisseur analogique-numérique (42) et un comparateur (46) relié au microprocesseur (50), que la mémoire (48) est séparée du microprocesseur (50) et est réalisée comme mémoire permanente et échangeable de sorte que des parleurs différents peuvent utiliser leur propre mémoire permanente (48), et que le dispositif d'entrée de données présente une prise femelle d'entrée (30) pour la fiche (28) du clavier (22) ainsi qu'un connecteur multiple (34) disposé du côté de sortie, qui correspond à l'entrée de clavier de l'ordinateur (24).

2. Dispositif d'entrée de données commandé par la voix, selon la revendication 1, caractérisé par le fait que la mémoire permanente (48) est réalisée sur une carte embrochable.

3. Dispositif d'entrée de données commandé par la voix, selon la revendication 1, caractérisé par le fait que les lignes de données du clavier (22) et du microprocesseur (24), situées du côté de sortie, sont connectées entre elles.

4. Dispositif d'entrée de données commandé par la voix, selon la revendication 1, caractérisé par le fait que le clavier (22) et le microprocesseur (24) sont synchronisés avec le même signal d'horloge.

5. Dispositif d'entrée de données commandé par la voix, selon la revendication 1, caractérisé par le fait que l'on prévoit un commutateur S entre les lignes de données du clavier (22) et du microprocesseur (50), qui sont situées du côté de sortie.

6. Dispositif d'entrée de données commandé par la voix, selon la revendication 5, caractérisé par le fait que le commutateur S peut être commandé mécaniquement par le biais d'un interrupteur tel qu'un interrupteur à impulsions.

7. Dispositif d'entrée de données commandé par la voix, selon la revendication 5, caractérisé par le fait que le commutateur S est commandé électroniquement, en particulier par le biais d'une commande par voix (58).

8. Dispositif d'entrée de données commandé par la voix, selon l'une des revendications 5 à 7, caractérisé par le fait que, soit, le commutateur S relient les lignes de données et d'impulsion d'horloge du clavier (22) directement à l'entrée de clavier de l'ordinateur (24) soit que ces lignes de données et d'impulsion d'horloge du clavier (22) sont connectées respectivement à une entrée du microprocesseur (50) et que respectivement une sortie du microprocesseur (50) est reliée à l'entrée de clavier de l'ordinateur (24).

9. Dispositif d'entrée de données commandé par la voix, selon la revendication 1, caractérisé par le fait qu'une mémoire de travail est disposée entre la mémoire (48) échangeable et le comparateur (46) et que les données de la mémoire (48) échangeable sont transférées dans cette mémoire de travail lorsqu'on commence à utiliser le dispositif d'entrée de données et sont, de là, amenées au comparateur (46).
